# FASCICULE DE BREVET EUROPEEN

(11) **EP 2 833 493 B1**
(45) Date de publication et mention de la délivrance du brevet: **09.03.2016**
(21) Numéro de dépôt: 14177686.4
(22) Date de dépôt: 18.07.2014
(51) Int. Cl.: H02B 1/20

(54) **Dispositif de liaison électrique entre deux appareils accolés fixés sur un rail**
Elektrische Anschlussvorrichtung zwischen zwei nebeneinander auf einer Schiene befestigten Geräten
Electric connection device between two juxtaposed devices attached to a rail

(30) Priorité: 30.07.2013 FR 1357509
(43) Date de publication de la demande: 04.02.2015
(73) Titulaire: HAGER-ELECTRO SAS, 67210 Obernai (FR)
(72) Inventeur: Charles, Benjamin, 67150 ERSTEIN (FR)
(74) Mandataire: Nuss, Laurent

(56) Documents cités:
- EP-A1- 2 408 073
- WO-A1-2008/065904

## Description

La présente invention a trait à un dispositif de liaison électrique de deux appareils électriques fixés de manière accolée sur un organe de fixation de type rail permettant d'avoir une disposition en rangées. L'invention concerne également un procédé pour la mise en place d'un tel dispositif, qui implique un traitement particulier de l'installation.

Les appareils prévus pour être raccordés électriquement par le dispositif de l'invention présentent chacun au moins un bornier de connexion d'alimentation amont apte à solidariser au moins un conducteur d'alimentation avec une borne de l'appareil. Parmi les conducteurs d'alimentation possibles pour un appareil, au moins un est traditionnellement issu d'une barre de pontage constituée d'un longeron relié à une phase ou au neutre et de lamelles rigides distantes d'un pas p prédéterminé, chacune de ces lamelles étant destinée à être raccordée individuellement à la borne d'un appareil via un bornier prévu à cet effet.

Le dispositif de liaison de l'invention comporte lui même deux languettes conductrices reliées électriquement et distantes dudit pas p, et un capteur de courant prévu pour mesurer le courant passant d'une languette à l'autre.

L'invention s'inscrit dans la tendance actuelle de plus en plus marquée qui consiste à équiper de moyens de mesure divers les armoires électriques dans lesquelles sont implantés les dispositifs de protection d'une installation par exemple domestique, qui protègent en fait les charges électriques disposées sur les lignes que ces appareils contrôlent. Les informations fournies par ces moyens de mesure peuvent avoir une vocation plutôt économique, et fournir par exemple des données de consommation à l'utilisateur final. Ces données peuvent d'ailleurs également lui servir à évaluer la pertinence du fonctionnement de son installation, quitte à procéder à des réajustements en cas d'anomalies constatées via ces moyens de mesure additionnels.

Le document EP2408073 divulge une cellule de mesure sous une barre de distribution avec des languettes.

Les données fournies par ce type de moyens de mesure peuvent également avoir une vocation plus technique, et fournir des indications sur les paramètres de fonctionnement les plus caractéristiques, par exemple le courant ou la tension. Ces paramètres sont entre autres susceptibles d'aider des techniciens à contrôler le fonctionnement de l'installation, voire utiles pour leur permettre d'isoler plus efficacement les raisons d'un dysfonctionnement.

Par ailleurs, les développements normatifs récents tendent à généraliser les mesures de courant, dans le but d'évaluer de façon distincte la consommation de quatre groupes de charges présentes dans les installations électriques usuelles, les charges correspondant respectivement au chauffage, aux prises de courant, à l'eau chaude sanitaire et à un dernier groupe qui comporte les installations électriques domestiques usuelles, y compris l'éclairage.

A cet égard, l'installation d'un capteur de mesure - par exemple entre deux appareils modulaires accolés sur le rail d'une installation - pose des problèmes principalement liés à l'absence d'espace dans ce type de tableau. Entre deux rangées superposées, par exemple, l'espace disponible est fortement réduit par la présence de l'ensemble des conducteurs d'alimentation, y compris les barres de pontage courant le long d'une rangée, et éventuellement par l'existence de dispositifs de mesure préexistants.

Compte tenu de l'encombrement de fait qui résulte de tous ces dispositifs, conducteurs etc., il va sans dire que l'ajout d'un dispositif supplémentaire ne peut pas s'effectuer simplement dans la plupart des cas, quel que soit le degré de compétence de l'installateur. Les travaux dans les espaces réduits qui subsistent s'effectuent au surplus parfois dans des conditions de sécurité, par exemple liées à l'absence d'isolation électrique, qui ne sont pas optimales, posant un problème supplémentaire.

Le dispositif de liaison électrique de l'invention propose une solution technique pour la liaison électrique de deux appareils accolés qui :
- permet une mesure fiable de paramètres électriques mesurables entre les deux appareils en question,
- respecte les branchements et câblages existants,
- assure une isolation électrique IP2X, et
- s'intègre dans l'environnement technique existant sans occuper trop d'espace supplémentaire.

Comme déjà mentionné, le dispositif de liaison de l'invention comporte deux languettes conductrices reliées électriquement et distantes du pas p qui sépare les lamelles rigides d'une barre de pontage, ainsi qu'un capteur de courant prévu pour mesurer le courant passant d'une languette à l'autre.

Il se caractérise à titre essentiel en ce qu'il comporte un organe de séparation électriquement isolant positionné de telle sorte qu'il prenne la place d'une portion de longeron entre deux lamelles successives lorsque les languettes sont insérées dans deux borniers adjacents d'appareils accolés.

La condition de l'insertion du dispositif de liaison de l'invention est par conséquent de procéder à une découpe du longeron de la barre de pontage de manière à enlever la portion dudit longeron qui relie deux lamelles adjacentes. En pratique, si cette condition d'insertion n'est pas remplie, les appareils situés en aval ne sont pas alimentés, puisque les languettes du dispositif de l'invention ne sont pas insérées au contact des bornes et qu'il n'y a dès lors pas de connexion.

Selon l'invention, l'organe de séparation est de plus configuré pour recouvrir les extrémités libres de longeron (qui résultent du sectionnement) placées de part et d'autre de l'organe de séparation et empêcher tout contact avec elles.

Cette caractéristique est nécessaire pour assurer l'isolation électrique de l'ensemble dans la zone d'action du dispositif de liaison de l'invention. Le longeron de la barre de pontage sectionné doit être isolé en deux endroits, en pratique aux deux extrémités de la portion de longeron enlevée.

Selon une possibilité, un carter en matériau isolant enveloppe une partie des languettes, leur liaison électrique ainsi que le capteur de courant, ledit carter comportant une paroi ou des chants aptes à s'appuyer contre les faces des appareils dans lesquelles débouchent les borniers de connexion, l'extrémité libre de chaque languette dépassant du carter étant dimensionnée pour s'insérer dans lesdits borniers de connexion de manière à permettre une connexion électrique lorsque le carter est en appui sur lesdites faces.

La fonction du carter est par conséquent double, d'une part assurer le positionnement de l'ensemble, et d'autre part permettre une isolation électrique.

En pratique, les languettes et leur liaison électrique forment sensiblement un U ou une arche.

De préférence, le capteur de courant est un tore en matériau ferro-magnétique placé autour de la base du U ou du sommet de l'arche, muni d'un enroulement secondaire relié à des moyens de traitement des signaux du secondaire, la portion du U ou de l'arche traversant le tore en constituant le primaire.

L'enroulement secondaire envoie en fait les signaux apparaissant dans ce qui est en pratique le secondaire de ce transformateur à destination d'un concentrateur ou plus généralement d'une unité de traitement électronique, qui les traite.

Selon une configuration possible, le tore peut être placé au milieu des languettes et constituer dans ce cas au moins une partie de l'organe de séparation.

Par ailleurs, selon l'invention, le carter peut comporter des moyens de visualisation de l'existence ou de caractéristiques d'au moins un paramètre mesuré, par exemple le courant ou la tension.

Ainsi, ces moyens de visualisation peuvent indiquer si du courant passe ou non, et si oui donner une indication visuelle de sa direction, voire de sa valeur.

Ces moyens de visualisation peuvent par exemple consister en un pictogramme fixe ou amovible indiquant le sens conventionnel du courant mesuré, repositionnable en fonction dudit sens.

Alternativement, ils peuvent consister en un indicateur lumineux dont la luminosité, la couleur ou le taux de remplissage de la surface varient selon l'existence ou la variation du ou des paramètres mesurés. Il peut par exemple s'agir de fenêtre juxtaposées permettant la visualisation à la manière d'un graphe à barres.

Selon une autre possibilité, le carter peut par ailleurs comporter un marquage sous forme d'une rainure ou d'un trait d'allure parallèle au plan d'accolement des appareils, qui matérialise le début de la zone de mesure du ou des paramètres. Cette délimitation se situe en pratique à proximité du plan d'accolement des deux appareils reliés par le dispositif de l'invention, et permet à l'installateur de repérer aisément la limite entre une zone dans laquelle aucune mesure n'est effectuée et une zone de mesure.

La présente invention concerne également un procédé d'installation du dispositif de liaison électrique décrit ci-dessus, caractérisé par les étapes suivantes :
- relever la position des deux appareils à relier par le dispositif de liaison électrique dans la rangée et leur attribuer à chacun un numéro de position n et n+1 dans la rangée, compté à partir d'une extrémité prédéterminée de ladite rangée ;
- mesurer la dimension d de l'organe de séparation électriquement isolant du dispositif électrique dans une direction parallèle à une ligne rejoignant les deux languettes conductrice et perpendiculaire à leur direction, ainsi que les distances 1 et 1' séparant respectivement les deux languettes n et n+1 dudit organe de séparation ;
- sectionner une portion de longeron d'une longueur strictement comprise entre d et p entre les lamelles n et n+1 comptées à partir de l'extrémité de la barre de pontage correspondant à ladite extrémité prédéterminée de la rangée, la portion sectionnée étant placée à au plus une distance 1 de la lamelle (6) n et/ou à au plus une distance I' de la lamelle n+1 ;
- insérer le dispositif de liaison électrique entre les deux tronçons résiduels de la barre de pontage.

Selon un mode de mise en oeuvre possible, la barre de pontage est démontée en vue d'être sectionnée, puis les deux tronçons de barre sont replacés en amont et en aval de l'endroit d'insertion du dispositif de liaison, de sorte que l'alimentation des appareils situés en aval du dispositif soit assurée.

L'invention va à présent être décrite plus en détail, en référence aux figures annexées, pour lesquelles :
- la figure 1 représente une vue perspective schématique d'un dispositif de liaison électrique selon l'invention ;
- la figure 2 montre en vue perspective une configuration possible du dispositif de liaison électrique implanté entre deux tronçons d'une barre de pontage de manière à relier deux appareils modulaires adjacents ;
- la figure 3 est une vue en perspective partielle qui reprend la configuration de la figure 2, vue du côté opposé ; et
- la figure 4 montre en coupe, pour la même configuration, à la fois la constitution du dispositif de liaison électrique de l'invention et son implantation dans des appareils modulaires, au voisinage de la barre de pontage.

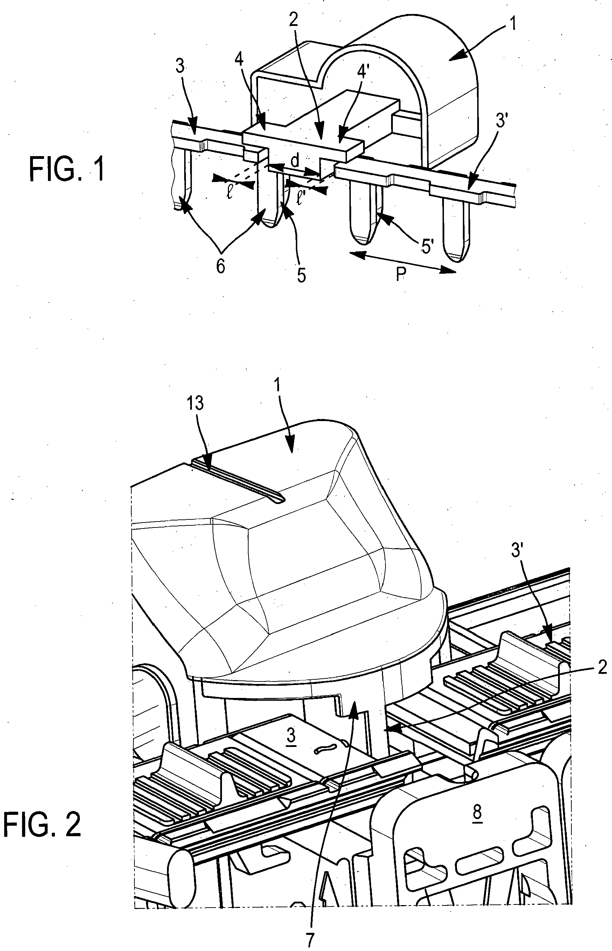

En référence à la figure 1, le dispositif électrique de l'invention comporte un carter (1) en matériau isolant de type plastique, d'où dépasse un organe de séparation électriquement isolant (2) qui isole électriquement deux tronçons de barre de pontage (3, 3'), tout en assurant une isolation électrique aux endroits sectionnés.

A cet effet, l'extrémité de l'organe de séparation (2) comporte deux ailettes (4, 4') qui viennent recouvrir les extrémités dénudées des tronçons de barre (3, 3'), afin d'empêcher tout contact de l'extérieur. Le reste des tronçons (3, 3') est en général isolé électriquement, comme cela apparaîtra dans les figures suivantes. Pour placer l'organe de séparation (2) correctement par rapport à la barre de pontage, il faut préalablement mesurer la largeur d de l'organe de séparation (2), ainsi que les distances 1 et 1' séparant respectivement les deux languettes n et n+1 et ledit organe de séparation (2). Puis, on sectionne une portion de longeron d'une longueur de barre de pontage strictement comprise entre d et p entre les lamelles n et n+1, la portion sectionnée étant placée à au plus une distance 1 de la lamelle n et/ou à au plus une distance I' de la lamelle n+1.

Des languettes (5, 5') distantes du même pas p que celui qui sépare les lamelles (6) des tronçons de barre de pontage (3, 3') dépassent du carter (1), parallèlement et à, proximité desdites lamelles (6) d'extrémités des tronçons (3, 3') de barres de pontage.

Ces lamelles (5, 5') sont reliées en U ou en arche à l'intérieur du carter (1), un capteur étant disposé autour de la portion reliant lesdites languettes (5, 5') (non représentées).

En référence à la figure 2, le carter (1) prend la forme d'un onglet permettant sa manipulation aisée avec deux doigts, d'où sa forme particulière avec une surface inclinée légèrement concave. L'organe de séparation isolant (2) est ici beaucoup plus fin que dans la figure précédente, une sorte de jupe frontale (7) améliorant encore l'isolation. La contrainte d'isolation IP2X est par conséquent parfaitement respectée. Les deux tronçons de barre de pontage (3, 3') sont en l'occurrence protégés par un boîtier plastique posé, exactement comme le carter (1) du dispositif de liaison électrique, sur les petites faces des produits modulaires adjacents reliées à l'aide du dispositif de l'invention, c'est-'a-dire les faces qui comportent les orifices ouvrant sur les borniers de connexion.

Le carter (1) comporte une rainure (13) de marquage montrant à l'installateur le début de la zone de mesure.

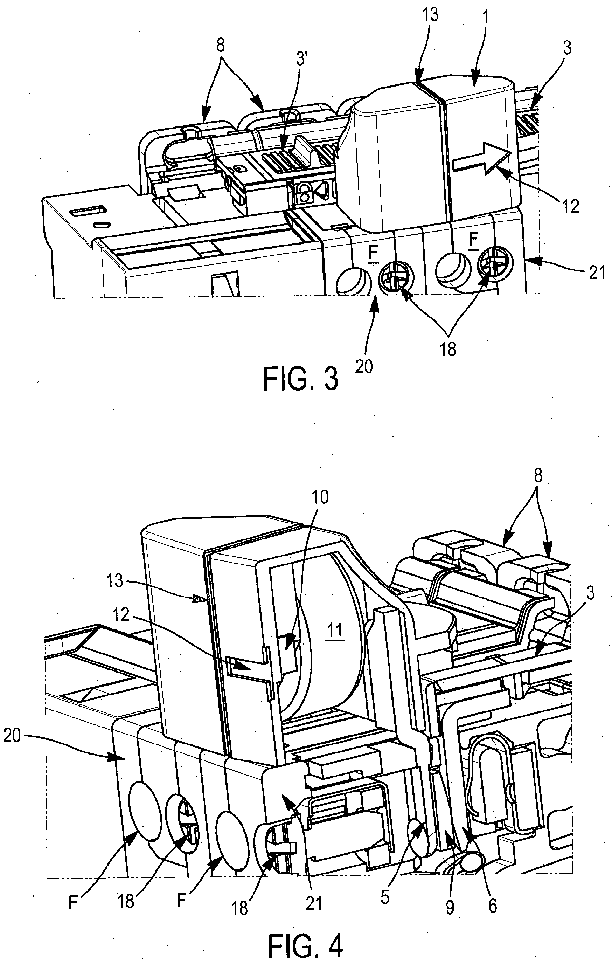

La figure 2 montre très partiellement les boîtiers (20, 21, voir figures 3 et 4) des appareils modulaires accolés reliés par le dispositif de l'invention. De ces boîtiers (20, 21) apparaît au premier plan la semelle mobile (8) de fixation sur un rail.

Ces semelles (8) sont également visibles sur la figure 3, qui montre l'aspect du carter isolant (1) du dispositif de l'invention tel qu'il apparaît au niveau de la façade des appareils modulaires, dans laquelle on voit les orifices le cas échéant munis de vis (18) des borniers à cages et vis prévus dans les deux appareils situés sur la droite de la figure 3 et entre lesquels est réalisée la liaison électrique à l'aide du dispositif de l'invention. Ces appareils peuvent par exemple être des disjoncteurs.

Une coupe parallèlement à la face d'accolement des appareils modulaires, apparaissant en figure 4, montre clairement le fonctionnement du dispositif de l'invention.

La languette (5) qui dépasse du carter (1) est enfichée au contact d'une borne (9) de l'appareil modulaire dans lequel elle s'insère; ladite borne étant également au contact d'une lamelle (6) du premier tronçon (3) de la barre de pontage, en l'occurrence recouverte d'une enveloppe isolante.

Cette languette (5) est reliée à l'autre languette (non visible) du dispositif de l'invention - c'est-à-dire celle qui est insérée dans l'appareil modulaire adjacent - via une portion conductrice (10) intérieur au carter (1) et qui passe dans un tore de mesure (11). Celui-ci fait office de transformateur, la portion (10) en étant le primaire alors qu'un secondaire (non représenté) envoie un signal indicatif d'au moins un paramètre électrique, à mesurer dans la portion (10), à destination d'une unité de gestion, par exemple un concentrateur.

Il est à noter, et cela est apparent sur cette figure, que le carter (1) ne dépasse pas de la façade (F) des appareils modulaires (20, 21) auxquels il est relié, et qu'il peut par conséquent être installé, comme les autres câbles ou la barre de pontage, derrière le plastron qui équipe les coffrets de distribution électriques. Le carter (1) comporte enfin un pictogramme (12) qui permet à l'utilisateur de visualiser en l'espèce la direction du courant mesuré.

L'invention telle décrite en référence aux différentes figures n'est qu'un exemple possible de réalisation, qui n'est pas à considérer comme étant exhaustif de l'invention. Celle-ci englobe au contraire un certain nombre de variantes de formes, dans la mesure où elles sont dans la portée des revendications annexées.

## Revendications

1. Dispositif de liaison électrique de deux appareils électriques par exemple modulaires (20, 21) fixés de manière accolée sur un organe de fixation de type rail permettant leur disposition en rangée, lesdits appareils (20, 21) présentant chacun au moins un bornier de connexion d'alimentation amont apte à solidariser au moins un conducteur d'alimentation avec une borne de l'appareil, au moins un conducteur d'alimentation étant issu d'une barre de pontage constituée d'un longeron (3, 3') relié à une phase ou au neutre et de lamelles rigides (6) distantes d'un pas p régulier prédéterminé, lesdites lamelles (6) étant prévues pour être solidarisées individuellement à la borne (9) d'un appareil (20, 21) via un desdits borniers, le dispositif de liaison comportant deux languettes (5, 5') conductrices reliées électriquement et distantes dudit pas p et un capteur de courant (11) prévu pour mesurer le courant passant d'une languette (5, 5') à l'autre (5', 5), **caractérisé en ce qu'**il comporte un organe de séparation (2) électriquement isolant positionné de telle sorte qu'il prenne la place d'une portion de longeron entre deux lamelles (6) successives lorsque les languettes (5, 5') sont insérées dans deux borniers adjacents d'appareils électriques (20, 21) accolés.

2. Dispositif de liaison électrique selon la revendication précédente, **caractérisé en ce que** ledit organe de séparation (2) est configuré pour recouvrir les extrémités libres de longeron (3, 3') placées de part et d'autre de l'organe de séparation (2) et empêcher tout contact avec elles.

3. Dispositif de liaison électrique selon l'une des revendications précédentes, **caractérisé en ce qu'**un carter (1) en matériau isolant enveloppe une partie des languettes (5, 5'), leur liaison électrique (10) ainsi que le capteur de courant (11), ledit carter (1) comportant une paroi ou des chants aptes à s'appuyer contre les faces des appareils (20, 21) dans lesquelles débouchent les borniers de connexion, l'extrémité libre de chaque languette (5, 5') dépassant du carter (1) étant dimensionnée pour s'insérer dans lesdits borniers de connexion de manière à permettre une connexion électrique lorsque le carter (1) est en appui sur lesdites faces.

4. Dispositif de liaison électrique selon l'une des revendications précédentes, **caractérisé en ce que** les languettes (5, 5') et leur liaison électrique forment sensiblement un U ou une arche.

5. Dispositif de liaison électrique selon la revendication précédente, **caractérisé en ce que** le capteur de courant est un tore (11) en matériau ferro-magnétique placé autour de la base du U ou du sommet de l'arche, muni d'un enroulement secondaire relié à des moyens de traitement des signaux du secondaire, la portion du U ou de l'arche traversant le tore (11) en constituant le primaire.

6. Dispositif de liaison électrique selon la revendication précédente, **caractérisé en ce que** le tore (11) est placé au milieu des languettes (5, 5') et constitue au moins une partie de l'organe de séparation (2).

7. Dispositif de liaison électrique selon l'une des revendications 3 à 6, **caractérisé en ce que** le carter (1) comporte des moyens de visualisation de l'existence ou de caractéristiques d'au moins un paramètre mesuré, par exemple le courant ou la tension.

8. Dispositif de liaison électrique selon la revendication précédente, **caractérisé en ce que** les moyens de visualisation consistent en un pictogramme (12) fixe ou amovible indiquant le sens conventionnel du courant mesuré, repositionnable en fonction dudit sens.

9. Dispositif de liaison électrique selon la revendication précédente, **caractérisé en ce que** les moyens de visualisation consistent en un indicateur lumineux dont la luminosité, la couleur ou le taux de remplissage de la surface varient selon l'existence ou la variation du ou des paramètres mesurés.

10. Dispositif de liaison électrique selon l'une des revendications 3 à 9, **caractérisé en ce que** le carter (1) comporte un marquage (13) sous forme d'une rainure ou d'un trait d'allure parallèle au plan d'accolement des appareils (20, 21), qui matérialise le début de la zone de mesure du ou des paramètres.

11. Procédé d'installation d'un dispositif de liaison électrique selon les revendications précédentes entre deux appareils (20, 21) de type modulaires accolés sur un rail de fixation et alimentés notamment par une barre de pontage, **caractérisé par** les étapes suivantes :
- relever la position des deux appareils (20, 21) à relier par le dispositif de liaison électrique dans la rangée et leur attribuer à chacun un numéro de position n et n+1 dans la rangée, compté à partir d'une extrémité prédéterminée de ladite rangée ;
- mesurer la dimension d de l'organe de séparation (2) électriquement isolant du dispositif électrique dans une direction parallèle à une ligne rejoignant les deux languettes conductrice (5, 5') et perpendiculaire à leur direction, ainsi que les distances I et I' séparant respectivement les deux languettes n et n+1 dudit organe de séparation (2) ;
- sectionner une portion de longeron d'une longueur strictement comprise entre d et p entre les lamelles (6) n et n+1 comptées à partir de l'extrémité de la barre de pontage correspondant à ladite extrémité prédéterminée de la rangée, la portion sectionnée étant placée à au plus une distance 1 de la lamelle (6) n et/ou à au plus une distance 1' de la lamelle (6) n+1 ;
- insérer le dispositif de liaison électrique entre les deux tronçons résiduels (3, 3') de la barre de pontage.

12. Procédé d'installation d'un dispositif de liaison électrique selon la revendication précédente, **caractérisé en ce que** la barre de pontage est démontée en vue d'être sectionnée, puis les deux tronçons de barre (3, 3') sont replacés en amont et en aval de l'endroit d'insertion du dispositif de liaison.

## Patentansprüche

1. Vorrichtung zur elektrischen Verbindung von zwei elektrischen Geräten, z.B. modularen Geräten (20, 21), die aneinander gefügt auf einer Befestigungsvorrichtung des Typs Schiene, welche ihre Anordnung in Reihe ermöglicht, befestigt sind, wobei die Geräte (20, 21) jeweils wenigstens eine Versorgungsklemmleiste davor aufweisen, die geeignet ist, wenigstens eine Versorgungsleitung mit einem Anschluss des Gerätes zu verbinden, wobei wenigstens eine Versorgungsleitung aus einer Kammschiene hervorgeht, die von einem Längsträger (3, 3'), welcher mit einem Außenleiter oder einem Neutralleiter verbunden ist, und von in einem vorbestimmten gleichbleibenden Abstand p angeordneten festen Lamellen (6) gebildet ist, wobei die Lamellen (6) so ausgelegt sind, um mittels der Versorgungsklemmleiste einzeln an den Anschluss (9) eines Gerät (20, 21) verbunden zu werden, wobei die Verbindungsvorrichtung zwei im Abstand p voneinander angeordnete und elektrisch verbundene leitfähige Zungen (5, 5') und einen Stromsensor (11) aufweist, der vorgesehen ist, um den von einer Zunge (5, 5') zur anderen (5', 5) Zunge fließenden Strom zu messen, **dadurch gekennzeichnet, dass** die Vorrichtung ein elektrisch isolierendes Trennelement (2) umfasst, das so angeordnet ist, dass es den Platz eines Abschnitts des Längsträgers zwischen zwei aufeinanderfolgenden Lamellen (6) einnimmt, wenn die Zungen (5, 5') in zwei benachbarten Anschlüssen aneinander gefügter elektrischer Geräte (20, 21) eingefügt sind.

2. Vorrichtung zur elektrischen Verbindung nach dem vorhergehenden Anspruch, **dadurch gekennzeichnet, dass** das Trennelement (2) ausgelegt ist, um die freien Enden des Längsträgers (3, 3'), welche beiderseits der Trennvorrichtung (2) angeordnet sind, zu bedecken und sämtlichen Kontakt mit diesen zu verhindern.

3. Vorrichtung zur elektrischen Verbindung nach einem der vorhergehenden Ansprüche, **dadurch gekennzeichnet, dass** ein Gehäuse (1) aus einem isolierenden Material einen Teil der Zungen (5, 5'), ihre elektrische Verbindung (10) sowie den Stromsensor (11) umhüllt, wobei das Gehäuse (1) eine Wand oder Schmalseiten umfasst, die ausgelegt sind, sich an den Seiten der Geräte (20, 21) abzustützen, in die die Klemmleisten münden, wobei das freie Ende jeder Zunge (5, 5'), welches aus dem Gehäuse (1) hinausragt, so dimensioniert ist, um sich in die Klemmleisten in der Art einzufügen, um eine elektrische Verbindung zu ermöglichen, wenn das Gehäuse (1) auf den Seiten anliegt.

4. Vorrichtung zur elektrischen Verbindung nach einem der vorhergehenden Ansprüche, **dadurch gekennzeichnet, dass** die Zungen (5, 5') und ihre elektrische Verbindung im Wesentlichen ein U oder einen Bogen ausbilden.

5. Vorrichtung zur elektrischen Verbindung nach dem vorhergehenden Anspruch, **dadurch gekennzeichnet, dass** der Stromsensor ein Torus (11) aus einem ferromagnetischen Material ist, welcher um die Basis des U oder um den Scheitelbereich des Bogens angeordnet ist und mit einer Sekundärwicklung versehen ist, die mit Mitteln zur Verarbeitung der Signale der Sekundärwicklung verbunden ist, wobei der Abschnitt des U oder des Bogens den Torus durchquert und dadurch die Primärseite bildet.

6. Vorrichtung zur elektrischen Verbindung nach dem vorhergehenden Anspruch, **dadurch gekennzeichnet, dass** der Torus (11) mitten in den Zungen (5, 5') angeordnet ist und wenigstens einen Teil des Trennelements (2) bildet.

7. Vorrichtung zur elektrischen Verbindung nach einem der Ansprüche 3 bis 6, **dadurch gekennzeichnet, dass** das Gehäuse (1) Mittel zur Visualisierung der Existenz oder von Merkmalen von wenigstens einem gemessenen Parameter, beispielsweise Strom oder Spannung, umfasst.

8. Vorrichtung zur elektrischen Verbindung nach dem vorhergehenden Anspruch, **dadurch gekennzeichnet, dass** die Mittel zum Visualisieren aus einem festen oder beweglichen Piktogramm (12) bestehen, das die festgelegte Richtung des gemessenen Stroms angibt und als Funktion der Richtung neu positionierbar ist.

9. Vorrichtung zur elektrischen Verbindung nach dem vorhergehenden Anspruch, **dadurch gekennzeichnet, dass** die Mittel zur Visualisierung aus einer Lichtanzeige bestehen, bei der die Helligkeit, die Farbe oder der Füllgrad der Fläche gemäß dem Vorliegen oder der Veränderung des oder der gemessenen Parameter variieren.

10. Vorrichtung zur elektrischen Verbindung nach einem der Ansprüche 3 bis 9, **dadurch gekennzeichnet, dass** das Gehäuse (1) eine Markierung (13) in Form einer Nut oder eines Strichs parallel zur Ebene der Aneinanderreihung der Geräte (20, 21) aufweist, die oder der den Anfang der Messzone des oder der Parameter angibt.

11. Verfahren zur Montage einer elektrischen Verbindungsvorrichtung nach den vorhergehenden Ansprüchen zwischen zwei Geräten (20, 21) des modularen Typs, die auf einer Fixierungsschiene aneinander gefügt sind und im Wesentlichen über eine Kammschiene versorgt werden, **gekennzeichnet durch** die folgenden Schritte:
- Festlegen der Position von zwei mittels der elektrischen Verbindungsvorrichtung zu verbindenden Geräten (20, 21) in der Reihe, wobei jedem Gerät gezählt von einem vorbestimmten Ende der Reihe eine Positionsnummer n und n+1 in der Reihe zugeordnet wird;
- Messen der Größe d des elektrisch isolierenden Trennelements (2) der elektrischen Vorrichtung in einer Richtung parallel zu einer Linie, die die beiden leitfähigen Zungen (5, 5') verbindet und senkrecht zu deren Richtung ist, sowie der Abstände I und I', die die zwei Zungen n und n+1 jeweils von der Trennvorrichtung (2) trennen;
- Trennen eines Teils des Längsträgers in einer Länge, die genau zwischen d und p liegt, zwischen den Lamellen (6) n und n+1 gezählt von dem Ende der Kammschiene, das dem vorbestimmten Ende der Reihe entspricht, wobei der abgetrennte Abschnitt um wenigstens einen Abstand 1 von der Lamelle (6) n und/oder um wenigstens einen Abstand I' von der Lamelle (6) n+1 positioniert wird;
- Einfügen der elektrischen Verbindungsvorrichtung zwischen den zwei verbleibenden Abschnitten (3,3') der Kammschiene.

12. Verfahren zur Montage einer elektrischen Verbindungsvorrichtung nach dem vorhergehenden Anspruch, **dadurch gekennzeichnet, dass** die Kammschiene zur Durchtrennung abgebaut wird und danach die zwei Stangenabschnitte (3, 3') vor und hinter dem Einfügeort der Verbindungsvorrichtung plaziert werden.

## Claims

1. Electric connection device for two electric devices, for example modular devices (20, 21), secured in an attached manner onto a rail type securing element enabling them to be arranged in a row, said devices (20, 21) each having at least one upstream feed connecting terminal block able to secure at least one feed conductor to a terminal of the device, at least one feed conductor originating from a bridging bar formed by a stringer (3, 3') connected to a phase or in neutral, and rigid lamellae (6) spaced apart by a predetermined regular distance p, said lamellae (6) being provided to be secured individually to the terminal (9) of a device (20, 21) via one of said terminal blocks, the connecting device comprising two conducting strips (5, 5') connected electrically and spaced apart from said distance p and a current sensor (11) provided for measuring the current passing from one strip (5, 5') to the other (5', 5), **characterised in that** it comprises an electrically insulating separating element (2) positioned such that it takes the place of a portion of the stringer between two successive lamellae (6) when the strips (5, 5') are inserted into two adjacent terminal blocks of attached electrical devices (20, 21).

2. Electric connection device according to the preceding claim, **characterised in that** said separating element (2) is configured to cover the free ends of the stringer (3, 3') positioned on either side of the separating element (2) and prevent all contact with the latter.

3. Electric connection device according to any one of the preceding claims, **characterised in that** a casing (1) made of insulating material envelopes a portion of the strips (5, 5'), their electrical connection (10) as well as the current sensor (11), said casing (1) comprising a wall or edges which can bear against the faces of the devices (20, 21) into which the connecting terminal blocks lead, the free end of each strip (5, 5') projecting beyond the casing (1) being dimensioned so as to be inserted into said connecting terminal blocks to as to enable an electrical connection when the casing (1) bears on said faces.

4. Electric connection device according to any one of the preceding claims, **characterised in that** the strips (5, 5') and their electrical connection form substantially a U shape or an arch.

5. Electric connection device according to the preceding claim, **characterised in that** the current sensor is a torus (11) made of ferromagnetic material placed around the base of the U or the top of the arch, provided with a secondary winding connected to means for processing the signals of the secondary, the portion of the U or the arch traversing the torus (11) forming the primary.

6. Electric connection device according to the preceding claim, **characterised in that** the torus (11) is positioned in the middle of strips (5, 5') and forms at least a portion of the separating element (2).

7. Electric connection device according to any one of claims 3 to 6, **characterised in that** the casing (1) comprises means for displaying the existence or characteristics of at least one measured parameter, for example the current or the voltage.

8. Electric connection device according to the preceding claim, **characterised in that** the display means consist of a fixed or movable pictogram (12) indicating the conventional direction of the measured current which is repositionable as a function of said direction.

9. Electric connection device according to the preceding claims, **characterised in that** the display means consist of a light indicator, in which the brightness, the colour or the fill rate of the surface vary according to the existence or the variation of the measured parameter(s).

10. Electric connection device according to any one of claims 3 to 9, **characterised in that** the casing (1) comprises a marking (13) in the form of a groove or a line parallel to the attachment plane of the devices (20, 21), which delineates the start of the measuring area or the parameters.

11. Method for installing an electric connection device according to the preceding claims between two modular type devices (20, 21) attached onto a securing rail and supplied in particular by a bridging bar, **characterised by** the following steps:
- identifying the position of the two devices (20, 21) to be connected by the electric connection device in the row and attributing to each one a position number n and n+1 in the row, counting from a predetermined end of said row;
- measuring the dimension d of the electrically insulating separating element (2) of the electric device in a direction parallel to a line connecting the two conducting strips (5, 5') and perpendicular to their direction, as well as distances 1 and 1' separating respectively the two strips n and n+1 of said separating element(2);
- cutting a portion of the stringer by a length strictly between d and p between the lamellae (6) n and n+1 counting from the end of the bridging bar corresponding to said predetermined end of the row, the severed portion being placed at most a distance 1 from the lamella (6) n and/or at most at a distance 1' from the lamella (6) n+1;
- inserting the electric connection device between the two remaining sections (3, 3') of the bridging bar.

12. Method for installing an electric connection device according to the preceding claim, **characterised in that** the bridging bar is removed with a view to being cut, then the two sections of bar (3, 3') are replaced upstream and downstream of the insertion site of the connecting device.
